# EUROPEAN PATENT APPLICATION

(11) **EP 1 918 543 A1**
(43) Date of publication of application: **07.05.2008**
(21) Application number: 06782739.4
(22) Date of filing: 09.08.2006
(51) Int. Cl.: F01N 3/10, B01D 53/86, B01D 53/94, F01N 3/02, F01N 3/08, F01N 3/28

(54) **EXHAUST GAS CLEAN-UP SYSTEM FOR INTERNAL COMBUSTION ENGINE**

(30) Priority: 24.08.2005 JP 2005242182
(71) Applicant: TOYOTA JIDOSHA KABUSHIKI KAISHA, Toyota-shi Aichi 471-8571 (JP)
(72) Inventor: YOSHIDA, Kohei, Toyota-shi, Aichi 471-8571 (JP); HAYASHI, Kotaro, Toyota-shi, Aichi 471-8571 (JP); ASANUMA, Takamitsu, Toyota-shi, Aichi 471-8571 (JP); TOSHIOKA, Shunsuke, Toyota-shi, Aichi 471-8571 (JP)
(74) Representative: TBK-Patent
(86) International application number: PCT/JP2006/316059
(87) International publication number: WO 2007/023712

(57) **Abstract**

An engine exhaust passage is provided with a fuel addition valve (14) for adding fuel in the form of atomized drops, an oxidation catalyst (11), and an NOₓ storage and reduction catalyst (12) in that order. The oxidation catalyst (11) carries as a precious metal not only platinum Pt, but also palladium Pd. A molar ratio of the platinum Pt with respect to the sum of the platinum Pt and palladium Pd carried on the oxidation catalyst (11) is set to between about 50 percent to about 80 percent.

## Description

### TECHNICAL FIELD

The present invention relates to an exhaust purification system of an internal combustion engine.

### BACKGROUND ART

Known in the art is an internal combustion engine provided with an NOₓ storage and reduction catalyst storing the NO contained in exhaust gas when the air-fuel ratio of the exhaust gas flowing into the engine exhaust passage is lean and releasing the stored NOₓ when the air-fuel ratio of the inflowing exhaust gas becomes the stoichiometric air-fuel ratio or rich. This NOₓ storage and reduction catalyst includes a precious metal catalyst comprised of platinum Pt and an NOₓ absorbent. When the air-fuel ratio is lean, the NOₓ contained in the exhaust gas, that is, the NO, is oxidized on the platinum Pt to NO₂, then is stored in the form of nitrate ions NO₃⁻ in the NOₓ absorbent.

On the other hand, when releasing and reducing the NOₓ absorbed from the NOₓ absorbent, the air-fuel ratio of the exhaust gas flowing into the NOₓ storage and reduction catalyst is made rich. If the air-fuel ratio of the exhaust gas is made rich, the oxygen concentration in the exhaust gas falls, so the NOₓ absorbed in the NOₓ absorbent in the form of nitrate ions NO₃⁻ appears in the form of NO₂ on the platinum Pt from inside the NOₓ absorbent. This NO₂ is reduced by the unburnt HC and CO contained in the exhaust gas.

Note that the air-fuel ratio of the exhaust gas is made rich by supplying additional fuel into the combustion chamber or by adding additional fuel into the engine exhaust passage. In this case, when the added fuel is gaseous and flows into the NOₓ storage and reduction catalyst, if the air-fuel ratio of the exhaust gas is made rich, the NOₓ is released from the NOₓ storage and reduction catalyst and reduced. However, when the air-fuel ratio of the exhaust gas should be made rich, additional fuel is added into the engine exhaust passage in the form of atomized drops. The situation differs somewhat when this added fuel deposits in the form of drops on the NOₓ storage and reduction catalyst.

That is, if the fuel to be added when the air-fuel ratio of the exhaust gas should be made rich deposits in the form of drops on the NOₓ storage and reduction catalyst, the platinum Pt on the NOₓ storage and reduction catalyst is covered by the fuel drops. However, if the platinum Pt is covered by the fuel drops, the oxygen in the exhaust gas cannot reach the surface of the platinum Pt and as a result the oxidation reaction of the fuel drops on the platinum Pt can no longer be performed well. If the oxidation reaction of the fuel drops cannot be performed well, the oxygen in the exhaust gas will not be sufficiently consumed and as a result the oxygen concentration in the exhaust gas will not sufficiently fall, so NOₓ will no longer be released well from the NOₓ absorbent. Further, the fuel drops will insufficiently vaporize, so the amount of the gaseous state unburned HC contained in the exhaust gas will not be sufficient and therefore the released NOₓ will not be able to be sufficiently reduced.

Therefore, the inventors took note of the oxygen storing capability of palladium Pd in the process of their research and discovered that by using as a precious metal not only platinum Pt, but also palladium Pd, the large amount of oxygen stored on the palladium Pd will promote the oxidation reaction of the fuel drops, the heat of this oxidation reaction will promote the vaporization of the fuel drops on the platinum Pt, and therefore the NOₓ release action from the NOₓ absorbent will be promoted.

In this case, if increasing the amount of palladium Pd and decreasing the amount of platinum Pt, the heat of the oxidation reaction of the oxygen stored in the palladium Pd will promote the vaporization of the fuel drops on the platinum Pt, but due to the small amount of platinum Pt, the release action of NOₓ will be weak and as a result an excellent NOₓ release action will not be able to be obtained. As opposed to this, if reducing the amount of palladium Pd and increasing the amount of platinum Pt, the vaporization of the fuel drops on the platinum Pt will not be sufficiently promoted due to the heat of the oxidation reaction of the stored oxygen of the palladium Pd, so even if increasing the amount of platinum Pt, only a weak NOₓ release action will be obtained and, therefore, in this case as well, an excellent NOₓ release action will not be obtained.

That is, the ratio of platinum Pt and palladium Pd giving an excellent NOₓ release action exists in a ratio of suitable ratios neither extremely large nor extremely small. Regarding this point, a known diesel particulate filter (see Japanese Patent Publication (A) No. 2003-205245) is designed to carry platinum Pt and palladium Pd in amounts of 1 g each per liter volume of the filter body. This becomes about 35.7 in terms of the molar ratio of platinum Pt with respect to the sum of the platinum Pt and palladium Pd. However, with this molar ratio, the amount of palladium Pd is too great compared with the platinum Pt and as a result an excellent NOₓ release action cannot be obtained.

### DISCLOSURE OF THE INVENTION

The present invention provides a ratio of platinum Pt and palladium Pd enabling an excellent NOₓ release action to be secured even if the platinum Pt is covered by the fuel drops when the fuel is added in the form of drops so as to release NOₓ from the NOₓ storage and reduction catalyst.

That is, according to the present invention, there is provided an internal combustion engine providing a fuel addition device adding fuel in the form of atomized drops inside an engine exhaust passage, providing an oxidation catalyst inside the engine exhaust passage downstream of the fuel addition device, providing an NOₓ storage and reduction catalyst storing the NOₓ contained in the exhaust gas when the air-fuel ratio of the inflowing exhaust gas is lean and releasing the stored NOₓ when the air-fuel ratio of the inflowing exhaust gas becomes a stoichiometric air-fuel ratio or rich inside the engine exhaust passage downstream of the oxidation catalyst, adding fuel from the fuel addition device when making the air-fuel ratio of the exhaust gas flowing into the NOₓ storage and reduction catalyst rich so as to make the NOₓ storage and reduction catalyst release NOₓ, and making the fuel added at this time deposit in the form of drops on the oxidation catalyst, wherein to make the fuel deposited in the form of drops on the oxidation catalyst vaporize, the oxidation catalyst carries as a precious metal not only platinum Pt, but also palladium Pd and the molar ratio of the platinum Pt with respect to the sum of the platinum Pt and palladium Pd carried on the oxidation catalyst is set from about 50 percent to about 80 percent.

Further, according to the present invention, there is provided an internal combustion engine providing a fuel addition device adding fuel in the form of atomized drops inside an engine exhaust passage, providing an NOₓ storage and reduction catalyst storing the NOₓ contained in the exhaust gas when the air-fuel ratio of the inflowing exhaust gas is lean and releasing the stored NOₓ when the air-fuel ratio of the inflowing exhaust gas becomes a stoichiometric air-fuel ratio or rich inside the engine exhaust passage downstream of the oxidation catalyst, adding fuel from the fuel addition device when making the air-fuel ratio of the exhaust gas flowing into the NOₓ storage and reduction catalyst rich so as to make the NOₓ storage and reduction catalyst release NOₓ, and making the fuel added at this time deposit in the form of drops on the NOₓ storage and reduction catalyst, wherein to make the fuel deposited in the form of drops on the NOₓ storage and reduction catalyst vaporize, the NOₓ storage and reduction catalyst carries as a precious metal not only platinum Pt, but also palladium Pd and the molar ratio of the platinum Pt with respect to the sum of the platinum Pt and palladium Pd carried on the NOₓ storage and reduction catalyst is set from about 50 percent to about 80 percent.

### BRIEF DESCRIPTION OF THE DRAWINGS

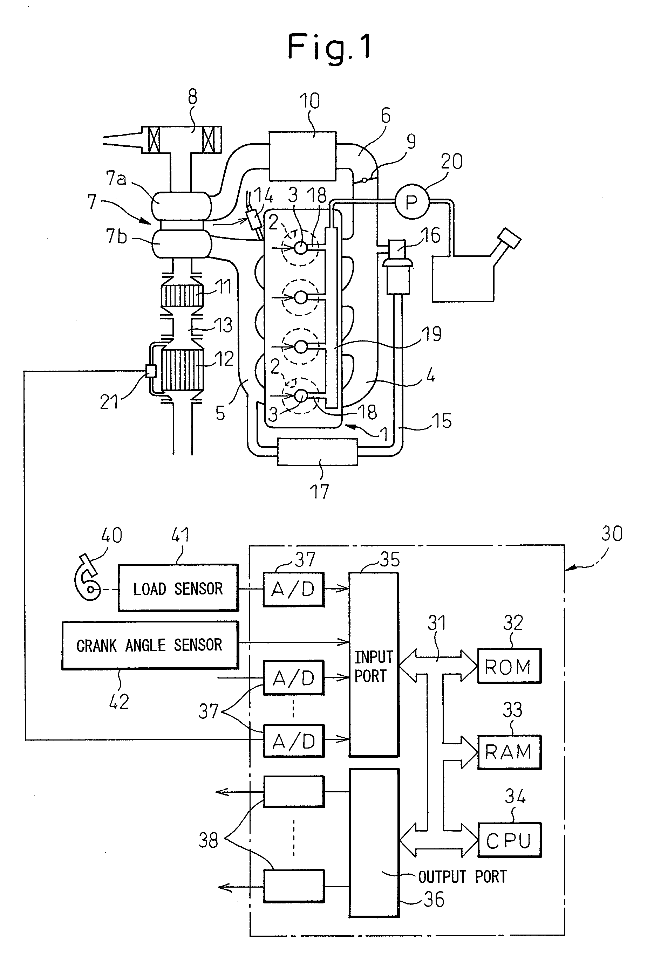

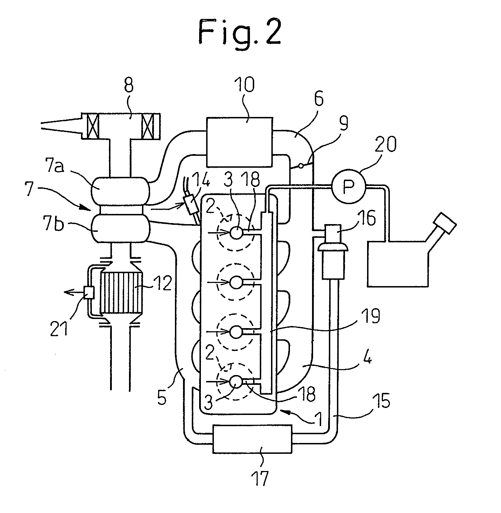

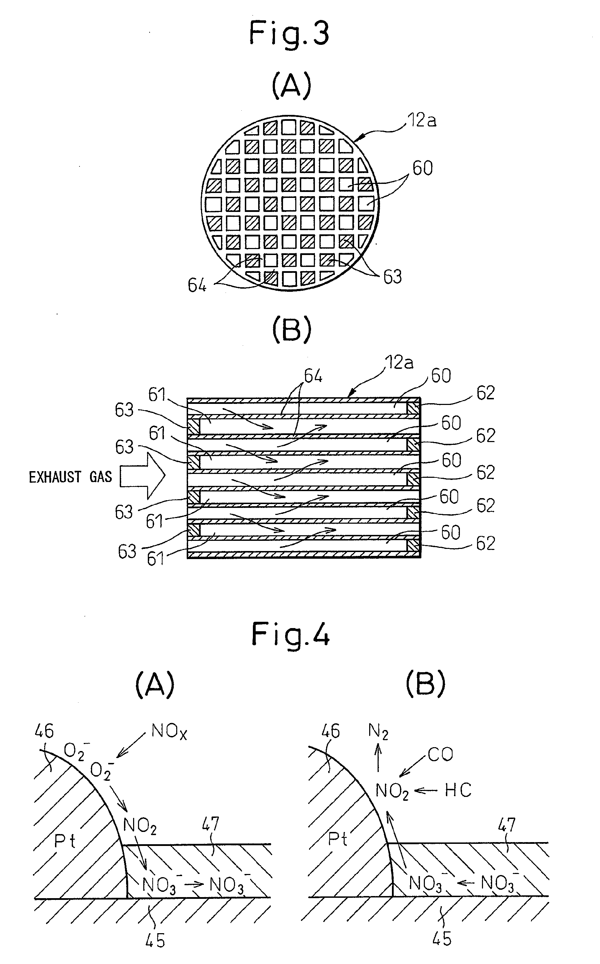

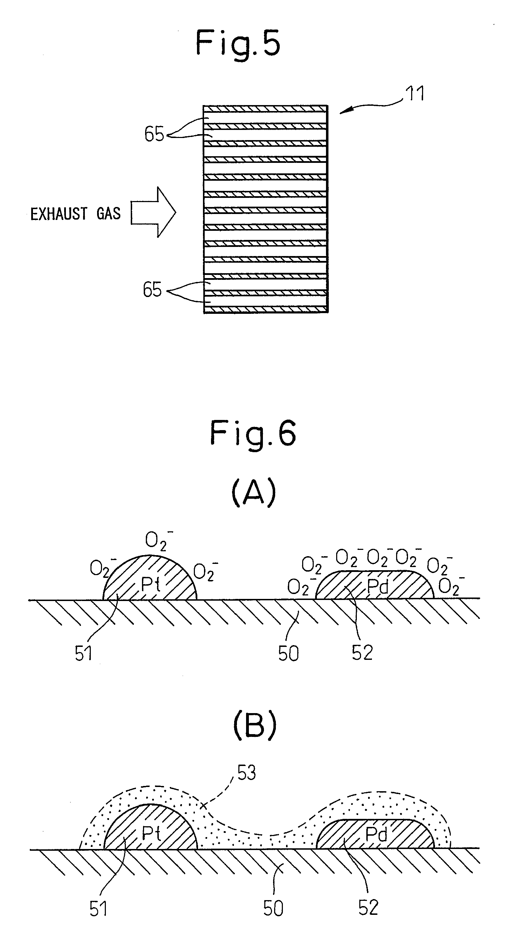

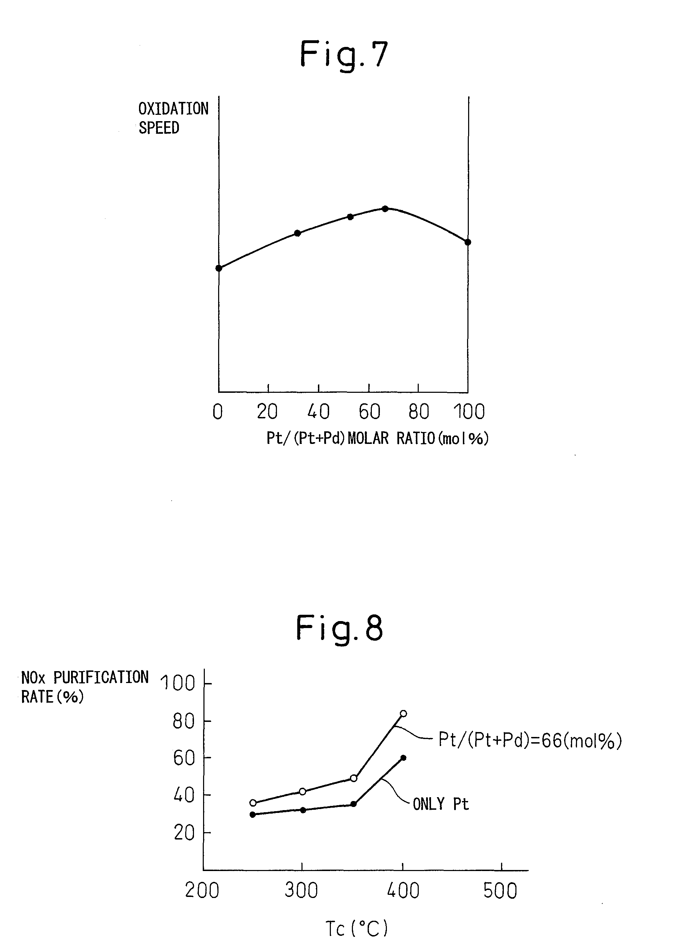

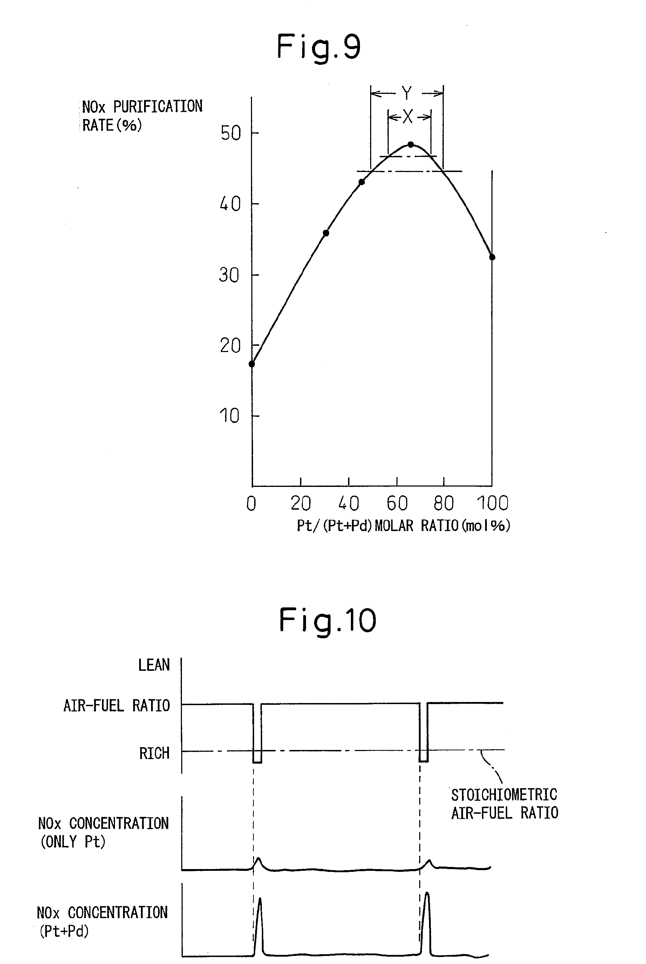

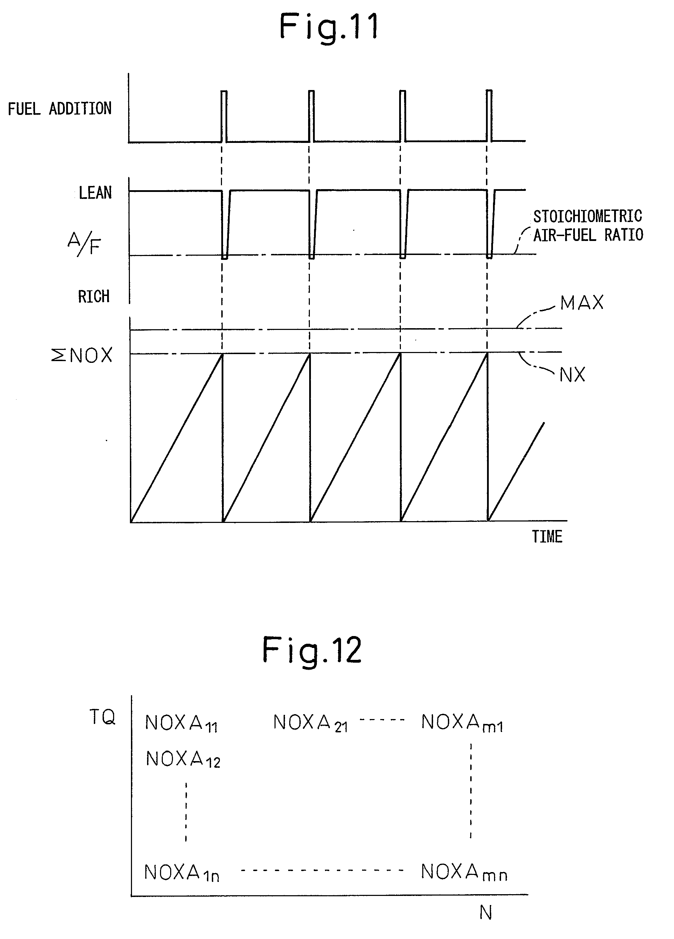

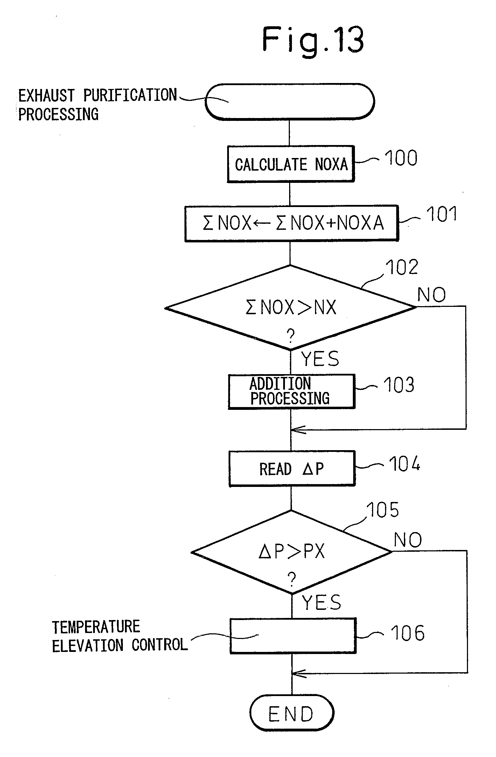

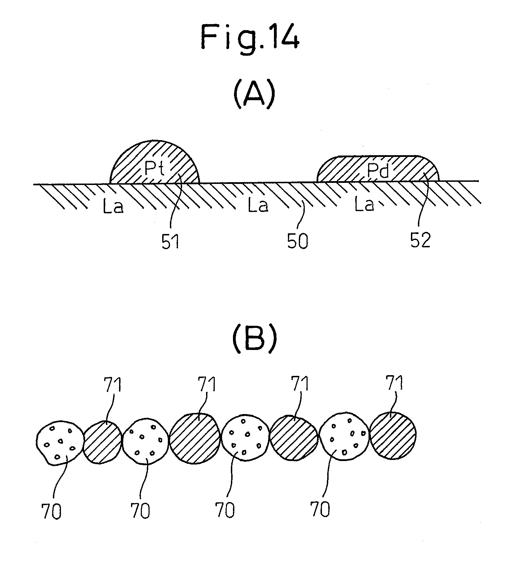

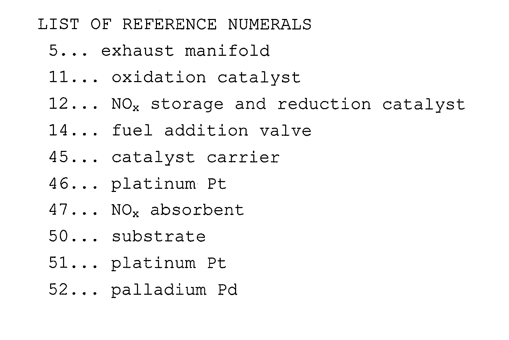

FIG. 1 is an overall view of a combustion ignition type internal combustion engine, FIG. 2 is an overall view of another embodiment of a combustion ignition type internal combustion engine, FIGS. 3 are views showing a particulate filter, FIGS. 4 are views for explaining an absorption/release action of NOₓ, FIG. 5 is a side cross-sectional view of an oxidation catalyst, FIGS. 6 are cross-sectional views illustrating a surface part of a substrate of an oxidation catalyst, FIG. 7 is a view showing the relationship between an oxidation speed and a platinum molar ratio, FIG. 8 is a view showing the relationship between an NOₓ purification rate and a temperature of the oxidation catalyst, FIG. 9 is a view showing the relationship between an NOₓ purification rate and a platinum molar ratio, FIG. 10 is a view of a comparative example, FIG. 11 is a time chart of NOₓ release processing, FIG. 12 is a view of a map of a per unit time NOₓ storage amount, FIG. 13 is a flowchart for exhaust purification processing, and FIG. 14 is a view of another embodiment.

### BEST MODE FOR CARRYING OUT THE INVENTION

FIG. 1 is an overall view of a combustion ignition type internal combustion engine.

Referring to FIG. 1, 1 indicates an engine body, 2 a combustion chamber of a cylinder, 3 an electronic control type fuel injector for injecting fuel into a combustion chamber 2, 4 an intake manifold, and 5 an exhaust manifold. The intake manifold 4 is connected through an intake duct 6 to an outlet of a compressor 7a of the exhaust turbocharger 7, while an inlet of the compressor 7a is connected to an air cleaner 8. Inside the intake duct 6 is provided a throttle valve 9 driven by a step motor. Further, around the intake duct 6 is provided a cooling device for cooling the intake air circulating inside the intake duct 6. In the embodiment shown in FIG. 1, engine cooling water is led inside the cooling device 10, where the engine cooling water cools the intake air.

On the other hand, the exhaust manifold 5 is connected to an inlet of an exhaust turbine 7b of the exhaust turbocharger 7, while an outlet of the exhaust turbine 7b is connected to an inlet of an oxidation catalyst 11. Further, the outlet of the oxidation catalyst 11 is connected through an exhaust pipe 13 to an NOₓ storage and reduction catalyst 12. The exhaust manifold 5 mounts a fuel addition valve 14 for adding mist-like, that is, particulates of, fuel, in the form of drops into the exhaust gas. In the embodiment according to the present invention, this fuel is comprised of diesel oil.

The exhaust manifold 5 and the intake manifold 4 are connected to each other through an exhaust gas recirculation (hereinafter referred to as the "EGR") passage 15. Inside the EGR passage 15 is arranged an electronic control type EGR control valve 16. Further, around the EGR passage 15 is arranged a cooling device 17 for cooling the EGR gas flowing through the inside of the EGR passage 15. In the embodiment shown in FIG. 1, the engine cooling water is led to the inside of the cooling device 17 where the engine cooling water then cools the EGR gas. On the other hand, each fuel injector 3 is connected through a fuel tube 18 to a common rail 19. This common rail 19 is fed with fuel from an electronic control type variable discharge fuel pump 20. The fuel fed into the common rail 19 is supplied through each fuel tube 18 to each fuel injector 3.

An electronic control unit 30 is comprised of a digital computer provided with a ROM (read only memory) 32, RAM (random access memory) 33, CPU (microprocessor) 34, input port 35, and output port 36 connected to each other by a bi-directional bus 31. The NOₓ storage and reduction catalyst 12 is provided with a differential pressure sensor 21 for detecting the pressure difference before and after the NOₓ storage and reduction catalyst 12. The output signal of this differential pressure sensor 21 is input through a corresponding AD converter 37 to an input port 35. Further, an acceleration pedal 40 has connected to it a load sensor 41 generating an output voltage proportional to the amount of depression L of the acceleration pedal 40. The output voltage of the load sensor 41 is input through a corresponding AD converter 37 to the input port 35. Further, the input port 35 has connected to it a crank angle sensor 42 generating an output pulse each time a crankshaft for example rotates by 15°. On the other hand, the output port 36 is connected through a corresponding drive circuit 38 to the fuel injector 3, throttle valve 9 drive step motor, fuel addition valve 14, EGR control valve 16, and a fuel pump 20.

FIG. 2 shows another embodiment of a combustion ignition type internal combustion engine. In this embodiment, the engine exhaust passage is not provided with any oxidation catalyst. The outlet of the exhaust turbine 7b is connected to the inlet of the NOₓ storage and reduction catalyst 12.

First, explaining the NOₓ storage and reduction catalysts 12 shown in FIG. 1 and FIG. 2, these NOₓ storage and reduction catalysts 12 are carried on three-dimensional net structure monolith carriers or pellet-shaped carriers or are carried on a particulate filter forming a honeycomb structure. In this way, the NOₓ storage and reduction catalyst 12 can be carried on various carriers, but below, the case of carrying the NOₓ storage and reduction catalyst 12 on a particulate filter will be explained.

FIGS. 3(A) and (B) show the structure of a particulate filter 12a carrying an NOₓ storage and reduction catalyst 12. Note that FIG. 3(A) shows the front view of the particulate filter 12a, while FIG. 3(B) shows the side cross-sectional view of the particulate filter 12a. As shown in FIGS. 3(A) and (B), the particulate filter 12a forms a honeycomb structure provided with a plurality of exhaust passages 60, 61 extending in parallel. These exhaust passages are comprised of exhaust gas inflow passages 60 with downstream ends sealed by plugs 62 and exhaust gas outflow passages 61 with upstream ends sealed by plugs 63. Note that in FIG. 3(A), the hatched parts show the plugs 63. Therefore, the exhaust gas inflow passages 60 and exhaust gas outflow passages 61 are alternately arranged across thin partition walls 64. In other words, the exhaust gas inflow passages 60 and exhaust gas outflow passages 61 are arranged so that each exhaust gas inflow passage 60 is surrounded by four exhaust gas outflow passages 61 and each exhaust gas outflow passage 61 is surrounded by four exhaust gas inflow passages 60.

The particulate filter 12a is for example formed from a porous material such as cordierite. Therefore, the exhaust gas flowing into the exhaust gas inflow passage 60, as shown by the arrows in FIG. 3(B), flows out into the adjoining exhaust gas outflow passages 61 through the surrounding partition walls 64.

When carrying the NOₓ storage and reduction catalyst 12 on the particulate filter 12a in this way, the partition walls of the exhaust gas inflow passages 60 and the exhaust gas outflow passages 61, that is, the two surfaces of the partition walls 64 and the walls inside the holes in the partition walls 64, carry a catalyst carrier comprised of for example alumina. FIG. 4(A) and (B) schematically show cross-sections of the surface part of this catalyst carrier 45. As shown in FIGS. 4(A) and (B), the surface of the catalyst carrier 45 carries a precious metal catalyst 46 dispersed on them. Further, the surface of the catalyst carrier 45 is formed with a layer of an NOₓ absorbent 47.

In this embodiment according to the present invention, platinum Pt is used as the precious metal catalyst 46, while as the ingredient forming the NOₓ absorbent 47, at least one element for example selected from potassium K, sodium Na, cesium Cs, or another such alkali metal, barium Ba, calcium Ca, or another such alkali earth, and lanthanum La, yttrium Y, or another such rare earth is used.

If referring to the ratio of the air and fuel (hydrocarbons) supplied into the engine intake passage, combustion chamber 2, and exhaust passage upstream of the NOₓ storage and reduction catalyst 12 as the "air-fuel ratio of the exhaust gas", the NOₓ absorbent 47 performs the NOₓ absorption/release action of absorbing the NOₓ when the air-fuel ratio of the exhaust gas is lean and releasing the absorbed NOₓ when the oxygen concentration in the exhaust gas falls.

That is, explaining the case of use of barium Ba as an ingredient forming the NOₓ absorbent 47 as an example, when the air-fuel ratio of the exhaust gas is lean, that is, when the exhaust gas has a high oxygen concentration, the NO contained in the exhaust gas, as shown in FIG. 4(A), is oxidized on the platinum Pt 46 to become NO₂, then is absorbed in the NOₓ absorbent 47 and bonds with the barium oxide BaO while dispersing in the form of nitrate ions NO₃⁻ into the NOₓ absorbent 47. In this way, NOₓ is absorbed in the NOₓ absorbent 47. So long as the oxygen concentration in the exhaust gas is high, NO₂ is formed on the surface of the platinum Pt 46. So long as the NOₓ absorption capability of the NOₓ absorbent 47 is not saturated, the NO₂ is absorbed in the NOₓ absorbent 47 and nitrate ions NO₃⁻ are generated.

As opposed to this, if the air-fuel ratio of the exhaust gas is made rich or the stoichiometric air-fuel ratio, the oxygen concentration in the exhaust gas falls, so the reaction proceeds in the opposite direction (NO₃⁻→NO₂) and therefore, as shown in FIG. 4(B), the nitrate ions NO₃⁻ in the NOₓ absorbent 47 are released in the form of NO₂ from the NOₓ absorbent 47. Next, the released NOₓ is reduced by the unburned HC and CO contained in the exhaust gas.

When the air-fuel ratio of the exhaust gas is lean in this way, that is, when combustion occurs under a lean air-fuel ratio, the NOₓ in the exhaust gas is absorbed in the NOₓ absorbent 47. However, if combustion is performed continuously under a lean air-fuel ratio, the NOₓ absorption capability of the NOₓ absorbent 47 ends up becoming saturated. Therefore, NOₓ ends up no longer being able to be absorbed by the NOₓ absorbent 47. Therefore, in the embodiment according to the present invention, fuel is added from the fuel addition valve 14 before the absorption capability of the NOₓ absorbent 47 becomes saturated so as to make the air-fuel ratio of the exhaust gas temporarily rich and thereby make the NOₓ absorbent 47 release the NOₓ.

Next, the oxidation catalyst 11 arranged at the upstream side of the NOₓ storage and reduction catalyst 12 in FIG. 1 will be explained.

FIG. 5 shows a side cross-sectional view of the oxidation catalyst 11. As shown in FIG. 5, the oxidation catalyst 11 forms a honeycomb structure which is provided with a plurality of exhaust gas passages 65 extending straight. The substrate of this oxidation catalyst 11 is comprised of alumina, zirconia, or another complex oxide. FIGS. 6(A) and (B) show cross-sections of the surface part of the substrate of the oxidation catalyst 11. As shown in FIGS. 6(A) and (B), the surface of the substrate 50 carries the platinum Pt shown by 51 and the palladium Pd shown by 52 dispersed on it.

Platinum Pt has the property of trapping oxygen on its surface, but the amount of oxygen which can be trapped is small. As opposed to this, palladium Pd has the ability to trap a far larger amount of oxygen than platinum Pt. Therefore, when the air-fuel ratio of the exhaust gas is lean, as shown in FIG. 6(A), a far greater amount of oxygen is trapped and stored on the palladium Pd compared with the platinum Pt. On the other hand, if viewed from the point of the oxidizing ability, platinum Pt has a much stronger oxidizing ability, while the oxidizing ability of palladium Pd is weak. In this way, platinum Pt and palladium Pd differ considerably in properties.

Further, as explained above, if adding fuel from the fuel addition valve 14 to make the air-fuel ratio of the exhaust gas rich, the NOₓ absorbent 47 releases NOₓ and the released NOₓ is reduced by the unburned HC and CO contained in the exhaust gas. In this case, if the added fuel is liquid in state, even if stoichiometrically the air-fuel ratio of the exhaust gas becomes rich, the oxygen concentration in the exhaust gas will not fall, so the NOₓ absorbent 47 will not release NOₓ. However, in the invention of the present application, even if the added fuel is liquid in state, the NOₓ absorbent 47 can be made to release the NOₓ well.

That is, part of the fuel added from the fuel addition valve 14 becomes a gas, but the majority of the fuel flows in the form of drops through the exhaust passage together with the exhaust gas, then the fuel drops deposit on the oxidation catalyst 11. As a result, as shown in FIG. 6(B), the platinum Pt and palladium Pd are covered by the fuel drops 53. If the platinum Pt is covered by the fuel drops 53, the oxygen included in the exhaust gas is blocked by the deposited fuel drops 53 and cannot reach the surface of the platinum Pt. Therefore, if taking note of only the platinum Pt, no matter how strong the oxidizing ability of the platinum Pt, the oxidation reaction of the fuel drops 53 will not proceed that much and therefore the fuel drops 53 will not vaporize that much.

As opposed to this, the palladium Pd stores a large amount of oxygen on its surface, so if the palladium Pd is covered by the fuel drops 53, the fuel drops 53 will be oxidized by the larger amount of oxygen on the palladium Pd. At this time, a large amount of heat of oxidation reaction is produced. This heat of oxidation reaction causes the fuel drops 53 covering the palladium Pd of course and also the fuel drops 53 covering the platinum Pt to be vaporized. If the fuel drops 53 covering the platinum Pt are vaporized, the oxygen in the exhaust gas can reach the surface of the platinum Pt and as a result the oxidation reaction of the unburned HC and CO on the platinum Pt becomes brisk. As a result, the oxygen concentration in the exhaust gas falls, so the NOₓ absorbent 47 releases NOₓ and the vaporized unburned HC and CO reduce the released NOₓ.

By having the oxidation catalyst 11 carry not only platinum Pt, but also palladium Pd in this way, the NOₓ absorbent 47 can be made to release and reduce the NOₓ. However, when the sum of the platinum Pt and palladium Pd is fixed, if increasing the amount of palladium Pd and decreasing the amount of platinum Pt, the vaporization of the fuel drops 53 on the platinum Pt is promoted by the heat of oxidation reaction of the stored oxygen of the palladium Pd, but since the amount of platinum Pt is small, the unburned HC and CO are not sufficiently oxidized and, as a result, an excellent NOₓ release action cannot be obtained.

As opposed to this, if reducing the amount of the palladium Pd and increasing the amount of the platinum Pt, the vaporization of the fuel drops 53 on the platinum Pt by the heat of oxidation reaction of the stored oxygen of the palladium Pd is not sufficiently promoted, so even if increasing the amount of platinum Pt, sufficient amounts of unburned HC and CO are not oxidized, therefore, in this case as well, an excellent NOₓ release action cannot be obtained. That is, the ratio of platinum Pt and palladium Pd giving an excellent NOₓ release action exists in a ratio of suitable ratios neither extremely large nor extremely small

FIG. 7 shows experimental results showing the relationship between the oxidation speed showing the amount of oxidation per unit time and the ratio of the number of moles of platinum Pt with respect to the sum of the number of moles of the platinum Pt and the number of moles of the palladium Pd (hereinafter referred to as the "platinum molar ratio"). In FIG. 7, the higher the oxidation speed, the better the action of release of the NOₓ from the NOₓ absorbent 47, therefore, as shown in FIG. 7, the NOₓ release action becomes the best when the platinum molar ratio is about 66 percent.

FIG. 8 shows experimental results showing the relationship between the NOₓ purification rate after the end of the NOₓ release action and the temperature Tc of the oxidation catalyst 11. Note that in FIG. 8, the black dots show the case where the oxidation catalyst 11 carries only platinum Pt, that is, the case where the platinum molar ratio is 100 percent, while the white dots show the case where the platinum molar ratio is 66 percent. Both when the platinum molar ratio is 100 percent and is 66 percent, as the temperature Tc of the oxidation catalyst 11 becomes higher, the NOₓ purification rate becomes higher, but no matter what the temperature Tc, it is learned that the NOₓ purification rate is higher when the platinum molar ratio is 66 percent than when the platinum molar ratio is 100 percent.

FIG. 9 shows the relationship between the NOₓ purification rate and platinum molar ratio when the temperature Tc of the oxidation catalyst 11 is about 350°C in FIG. 8. The pattern of change of the NOₓ purification rate shown in FIG. 9 has the same trend as the pattern of change of the oxidation speed shown in FIG. 7. As shown in FIG. 9, the NOₓ purification rate becomes highest when the platinum molar ratio is about 66 percent. Therefore, the amounts of the platinum Pt and palladium Pd to be carried on the oxidation catalyst 11 can be said to be most preferably determined so that the platinum molar ratio becomes about 66 percent.

Note that even if the NOₓ purification rate becomes lower than the maximum NOₓ purification rate, if the degree of drop is about 5 percent, it still can be said that the rate is about the maximum NOₓ purification rate. The range of the platinum molar ratio where the NOₓ purification rate can be said to be about the maximum NOₓ purification rate in this way becomes between about 58 percent to about 75 percent as shown by X in FIG. 9. Therefore, the platinum molar ratio can be said to be preferably set between about 58 percent to about 75 percent.

Note that NOₓ purification rate can be practically used even if about 10 percent lower than the maximum NOₓ purification rate. The range of the platinum molar ratio where the NOₓ purification rate becomes 10 percent lower than the maximum NOₓ purification rate becomes, as shown by Y in FIG. 9, between about 50 percent to about 80 percent. Therefore, when viewed practically, the platinum molar ratio should be set between about 50 percent to 80 percent.

In the embodiment shown in FIG. 2, the catalyst carrier 45 of the NOₓ storage and reduction catalyst 12 (FIG. 4) carries not only platinum Pt but also palladium Pd. The NOₓ purification rate in this case also becomes about the same as the NOₓ purification rate shown in FIG. 9. Therefore, in this case as well, the NOₓ purification rate becomes highest when the platinum molar ratio is about 66 percent. Therefore, the amounts of the platinum Pt and palladium Pd to be carried on the NOₓ storage and reduction catalyst 12 can be said to be most preferably determined so that the platinum molar ratio becomes about 66 percent.

Further, in the embodiment shown in FIG. 2 as well, the range of the platinum molar ratio where the NOₓ purification rate can be said to be about the maximum NOₓ purification rate is between about 58 percent to about 75 percent. Therefore, in this embodiment as well, it can be said that the platinum molar ratio is preferably set to about 58 percent to about 75 percent.

Further, in the embodiment shown in FIG. 2 as well, the range of the platinum molar ratio where the NOₓ purification rate becomes 10 percent lower than the maximum NOₓ purification rate, that is, the range of the platinum molar ratio which can be used when viewed practically, becomes about 50 percent to about 80 percent, therefore, in this embodiment as well, when viewed from a practical perspective, the platinum molar ratio may be set between about 50 percent to 80 percent.

FIG. 10 shows the NOₓ concentration in the exhaust gas flowing out from the NOₓ storage and reduction catalyst 12 in the case where for example, in a gasoline engine, the air-fuel ratio in the combustion chamber is made rich, that is, the air-fuel ratio of the exhaust gas itself forming the gas state is made rich, for the case where the oxidation catalyst 11 carries only platinum Pt and the case where it carries platinum Pt and palladium Pd. As will be understood from FIG. 10, the NOₓ concentration when the air-fuel ratio of the exhaust gas should be made rich is lower when the oxidation catalyst 11 carries only platinum Pt, but becomes higher when the oxidation catalyst 11 carries platinum Pt and palladium Pd.

That is, if the air-fuel ratio of the exhaust gas is made rich, the oxygen concentration in the exhaust gas falls, so the NOₓ absorbent 47 releases NOₓ. However, if the oxidation catalyst 11 carries palladium Pd, the unburned HC and CO contained in the exhaust gas are oxidized by the large amount of oxygen stored on the palladium Pd and the released NOₓ can no longer be reduced by the unburned HC and CO. As a result, when the oxidation catalyst 11 carries platinum Pt and palladium Pd, the NOₓ concentration becomes higher.

That is, when the NOₓ absorbent 47 should release NOₓ, when the air-fuel ratio of the exhaust gas is made rich in the gas state, if the oxidation catalyst 11 is made to carry palladium Pd, a large amount of NOₓ is exhausted into the atmosphere and therefore the NOₓ purification rate ends up falling. However, even if using the same oxidation catalyst 11 carrying palladium Pd, when the NOₓ absorbent 47 should release NOₓ, a high NOₓ purification rate is obtained opposite to the case where fuel is added to the exhaust gas in the form of drops. If viewed from the point of the purification of NOₓ in this way, the palladium Pd acts effectively when the fuel is added in the form of drops.

Next, the NOₓ release control will be explained with reference to FIG. 11.

FIG. 11 shows the changes in the NOₓ amount ΣNOX stored in the NOₓ storage and reduction catalyst 12 and the timing of adding fuel for release of NOₓ to make the air-fuel ratio A/F of the exhaust gas rich. The NOₓ amount exhausted from the engine per unit time changes in accordance with the engine operating state. Therefore, the NOₓ amount stored in the NOₓ storage and reduction catalyst 12 per unit time also changes in accordance with the engine operating state. In the embodiment according to the present invention, the NOₓ amount NOXA stored in NOₓ storage and reduction catalyst 12 per unit time is stored as a function of the required torque TQ and engine rotational speed N in the form of the map shown in FIG. 12 in advance in the ROM 32. By cumulatively adding this NOₓ amount NOXA, the NOₓ amount ΣNOX stored in the NOₓ storage and reduction catalyst 12 is calculated.

On the other hand, in FIG. 11, MAX indicates the maximum NOₓ storage amount which the NOₓ storage and reduction catalyst 12 can store, while NX indicates the allowable value of the NOₓ amount which the NOₓ storage and reduction catalyst 12 can be made to store. Therefore, as shown in FIG. 11, if the NOₓ amount ΣNOX reaches the allowable value NX, fuel is added, whereby the air-fuel ratio A/F of the exhaust gas flowing into the NOₓ storage and reduction catalyst 12 is temporarily made rich and therefore the NOₓ storage and reduction catalyst 12 releases NOₓ.

On the other hand, the particulate matter contained in the exhaust gas is trapped and successively oxidized on the particulate filter 12a carrying the NOₓ storage and reduction catalyst 12. However, if the amount of the particulate matter deposited becomes greater than the particulate matter oxidized, the particulate matter will gradually build up on the particulate filter 12a. In this case, if the deposited amount of the particulate matter increases, a drop in the engine output will end up being caused. Therefore, when the deposited amount of the particulate matter increases, the deposited particulate matter must be removed. In this case, if raising the temperature of the particulate filter 12a under an excess of air to about 600°C, the deposited particulate matter is removed by oxidation.

Therefore, in the embodiment according to the present invention, when the amount of the particulate matter deposited on the particulate filter 12a exceeds the allowable amount, the temperature of the particulate filter 12a is raised under a lean air-fuel ratio of the exhaust gas, whereby the deposited particulate matter is removed by oxidation. Specifically speaking, in the embodiment according to the present invention, when the differential pressure ΔP before and after the particulate filter 12a detected by the differential pressure sensor 21 exceeds the allowable value PX, it is judged that the amount of the deposited particulate matter has exceeded the allowable amount. At this time, the air-fuel ratio of the exhaust gas flowing into the particulate filter 12a is maintained lean and fuel is added from the fuel addition valve 14 to raise the temperature of the particulate filter 12a by the heat of oxidation reaction of this added fuel.

FIG. 13 shows an exhaust purification processing routine.

Referring to FIG. 13, first, at step 100, the NOₓ amount NOXA stored per unit time is calculated from the map shown in FIG. 12. Next, at step 101, this NOXA is added to the NOₓ amount ΣNOX stored in the NOₓ storage and reduction catalyst 12. Next, at step 102, whether the stored NOₓ amount ΣNOX has exceeded the allowable value NX is judged. When ΣNOX>NX, the routine proceeds to step 103, where processing for addition of fuel from the fuel addition valve 14 is performed. Next, at step 104, the differential pressure sensor 21 detects the differential pressure ΔP before and after the particulate filter 12a. Next, at step 105, whether the differential pressure ΔP has exceeded the allowable value PX is judged. When ΔP>PX, the routine proceeds to step 106, where temperature elevation control of the particulate filter 12a is performed.

FIGS. 14(A) and (B) show another embodiment.

If the carrier carrying the palladium Pd is made to contain an element of a basicity able to give electrons to the palladium Pd, a large number of electrons will gather on the surface of the palladium Pd. If a large number of electrons gather on the surface of the palladium Pd in this way, a large amount of the oxygen contained in the exhaust gas will be adsorbed on the surface of the palladium Pd in search of electrons, therefore the oxygen storage amount of the palladium Pd will increase. Therefore, in the embodiment shown in FIG.14(A) and (B), to increase the oxygen storage amount of the palladium Pd, the carrier carrying the palladium Pd may be made to contain an element of a basicity able to give electrons to the palladium Pd, for example, an alkali earth or rare earth element.

That is, FIG. 14(A), like FIG. 6(A), shows the cross-section of the surface part of the substrate 50 of the oxidation catalyst 11. In this embodiment, as shown in FIG. 14(A), the substrate 50 is made to include the rare earth element lanthanum La. In this embodiment, this lanthanum La functions as a thermal stabilizer of the substrate 50. On the other hand, FIG. 14(B) shows an embodiment in the case where the oxidation catalyst 11 is comprised of an aggregate of the particulate carrier. In this embodiment, the particulate carrier is comprised of a basic carrier 70 including an alkali earth or rare earth element and an acidic carrier 71 including tungsten or titanium or another element with a high electric cathodicity. In addition to platinum Pt, palladium Pd is selectively carried on the basic carrier 70.

As explained above, according to the present invention, by setting the molar ratio of the platinum Pt with respect to the sum of the platinum Pt and palladium Pd carried on the oxidation catalyst or NOₓ storage and reduction catalyst between about 50 percent to about 80 percent, it is possible to secure an excellent NOₓ release action from the NOₓ storage and reduction catalyst.

## Claims

1. An internal combustion engine providing a fuel addition device adding fuel in the form of atomized drops inside an engine exhaust passage, providing an oxidation catalyst inside the engine exhaust passage downstream of the fuel addition device, providing an NOₓ storage and reduction catalyst storing the NOₓ contained in the exhaust gas when the air-fuel ratio of the inflowing exhaust gas is lean and releasing the stored NOₓ when the air-fuel ratio of the inflowing exhaust gas becomes a stoichiometric air-fuel ratio or rich inside the engine exhaust passage downstream of the oxidation catalyst, adding fuel from the fuel addition device when making the air-fuel ratio of the exhaust gas flowing into the NOₓ storage and reduction catalyst rich so as to make the NOₓ storage and reduction catalyst release NOₓ, and making the fuel added at this time deposit in the form of drops on the oxidation catalyst, wherein to make the fuel deposited in the form of drops on the oxidation catalyst vaporize, the oxidation catalyst carries as a precious metal not only platinum Pt, but also palladium Pd and the molar ratio of the platinum Pt with respect to the sum of the platinum Pt and palladium Pd carried on the oxidation catalyst is set from about 50 percent to about 80 percent.

2. An exhaust purification system of internal combustion engine as set forth in claim 1, wherein a molar ratio of platinum Pt with respect to the sum of the platinum Pt and palladium Pd carried on the oxidation catalyst is set to about 58 percent to about 75 percent.

3. An exhaust purification system of internal combustion engine as set forth in claim 1, wherein a carrier of the oxidation catalyst is comprised of a basic carrier including at least one element selected from an alkali earth or rare earth.

4. An exhaust purification system of internal combustion engine as set forth in claim 1, wherein the NOₓ storage and reduction catalyst is carried on a particulate filter.

5. An internal combustion engine providing a fuel addition device adding fuel in the form of atomized drops inside an engine exhaust passage, providing an NOₓ storage and reduction catalyst storing the NOₓ contained in the exhaust gas when the air-fuel ratio of the inflowing exhaust gas is lean and releasing the stored NOₓ when the air-fuel ratio of the inflowing exhaust gas becomes a stoichiometric air-fuel ratio or rich inside the engine exhaust passage downstream of the oxidation catalyst, adding fuel from the fuel addition device when making the air-fuel ratio of the exhaust gas flowing into the NOₓ storage and reduction catalyst rich so as to make the NOₓ storage and reduction catalyst release NOₓ, and making the fuel added at this time deposit in the form of drops on the NOₓ storage and reduction catalyst, wherein to make the fuel deposited in the form of drops on the NOₓ storage and reduction catalyst vaporize, the NOₓ storage and reduction catalyst carries as a precious metal not only platinum Pt, but also palladium Pd and the molar ratio of the platinum Pt with respect to the sum of the platinum Pt and palladium Pd carried on the NOₓ storage and reduction catalyst is set from about 50 percent to about 80 percent.

6. An exhaust purification system of internal combustion engine as set forth in claim 5, wherein a molar ratio of platinum Pt with respect to the sum of the platinum Pt and palladium Pd carried on the NOₓ storage and reduction catalyst is set to about 58 percent to about 75 percent.

7. An exhaust purification system of internal combustion engine as set forth in claim 5, wherein the NOₓ storage and reduction catalyst is carried on a particulate filter.
